# EUROPÄISCHE PATENTANMELDUNG

(11) **EP 3 557 356 A1**
(43) Veröffentlichungstag der Anmeldung: **23.10.2019**
(21) Anmeldenummer: 18167521.6
(22) Anmeldetag: 16.04.2018
(51) Int. Cl.: G05B 23/02

(54) **VERFAHREN UND AUTOMATISIERUNGSSYSTEM ZUM SICHEREN AUTOMATISCHEN BETRIEB EINER MASCHINE ODER EINES FAHRZEUGS**

(71) Anmelder: TTTech Auto AG, 1040 Wien (AT)
(72) Erfinder: Kopetz, Hermann, 2500 Baden (AT)
(74) Vertreter: Patentanwaltskanzlei Matschnig & Forsthuber OG

(57) **Zusammenfassung**

Die Erfindung betrifft ein Verfahren und eine Architektur zum sicheren automatischen Betrieb einer Maschine oder eines Fahrzeugs. Erfindungsgemäß wird der sicherheitskritische Teil der Software so stark wie technisch möglich reduziert, so dass diese sicherheitskritische Software *einfach* ist. Die einfache sicherheitskritische Software wird auf einem dedizierten Computer mit Hardwarefehlertoleranz ausgeführt. Die einfache sicherheitskritische Software wird dadurch realisiert, dass am Ende jeder Zeitscheibe mittels eines einfachen Programms von einem Vergleicher überprüft wird, ob die errechneten Sollwerte für die Aktoren innerhalb eines oder von mehreren sicheren Intervallen liegen. In einem autonomen Fahrzeug sind dies nur zwei Sollwerte: ein Sollwert für den Lenkwinkel und ein Sollwert für die Beschleunigung/Verzögerung. Die Sollwerte, wie auch die Intervalle, werden von zwei unabhängigen komplexen Softwaresystemen am Ende jeder Zeitscheibe an den Vergleicher gesendet. Der Vergleicher besteht aus einem fehlertoleranten Hardwaresystem, auf dem die einfache Vergleichssoftware ausgeführt wird. Im Falle, dass der Vergleicher einen Fehler feststellt, wird eine Notabschaltung der Maschine veranlasst.

## Beschreibung

Die Erfindung betrifft ein Verfahren zum Betrieb, insbesondere zum sicheren automatischen Betrieb, einer Maschine oder eine Fahrzeugs, insbesondere eines Kraftfahrzeuges, mit einem Automatisierungssystem.

Weiters betrifft die Erfindung ein Automatisierungssystem zum Betrieb, insbesondere zum sicheren automatischen Betrieb einer Maschine oder eine Fahrzeugs.

Die Erfindung liegt im Bereich der Computertechnik. Sie beschreibt ein Verfahren und ein Automatisierungssystem zum sicheren automatischen Betrieb einer Maschine oder eines Fahrzeugs.

Der automatische Betrieb einer Maschine, z.B. eines Fahrzeugs, oder Roboters oder einer technischen Anlage, erfordert ein Automatisierungssystem, das die Umwelt der Maschine, des Fahrzeuges, etc. mit Sensoren beobachtet, mittels eines auf einem Echtzeitcomputersystem laufenden Prozessmodells die optimale Führung des Prozesses errechnet und über Aktoren den Ablauf der physikalischen Vorgänge beeinflusst. Die Beobachtung der Umwelt kann mit optischen (Kamera), LIDAR und Radarsensoren sowie diversen anderen Sensoren erfolgen. Die Auswertung der Sensordaten, die Datenfusion und die Erstellung der erforderlichen Umweltmodelle sowie die Planung des gewünschten Prozessablaufs erfordern komplexe Softwaresysteme mit Millionen von Befehlen.

In vielen Anwendungen, z.B. der autonomen Steuerung eines Fahrzeugs, insbesondere Kraftfahrzeuges, kann ein auftretender Fehler im Automatisierungssystem katastrophale Auswirkungen haben. Ein solcher Fehler kann durch einen transienten oder permanenten Ausfall der Hardware oder durch einen Defekt in der Software (Entwurfsfehler) ausgelöst werden. In sicherheitskritischen Anwendungen wird gefordert dass die Wahrscheinlichkeit für das Auftreten eines katastrophalen Ausfalls weniger 10⁻⁹/ Stunde betragen muss.

Die Wahrscheinlichkeit für das Auftreten eines katastrophalen Hardwareausfalls kann durch den Einsatz von Hardwareredundanz auf das geforderte Maß reduziert werden.

Aus der Fachliteratur ist keine allgemein akzeptierte Methode bekannt, wie die Wahrscheinlichkeit für das Auftreten von katastrophalen Entwurfsfehlern in komplexen Softwaresystemen auf das geforderte Maß reduziert werden kann. In der *NASA Study on Flight Software Complexity* [Dvo09] wird auf Seite 3 angeführt: *An exceptionally good software development process can keep defects down to as low as 1 defect per 10,000 lines of code.* Dies bedeutet, dass in einem System mit einer Million Befehlen im Mittel noch 100 Softwarefehler zu erwarten sind, von denen einige während des Betriebes zu Ausfällen führen können. Um die Auswirkungen dieser Fehler abschätzen zu können, ist ein Testlauf von mindestens der Länge der geplanten MTBF (*Mean Time between Failures*) erforderlich [Lit97]. Aus der weltweiten Unfallstatistik geht hervor [Wik18], dass in Europa im Verkehr ein Unfallopfer pro 200 Millionen gefahrene km zu beklagen ist. Nimmt man eine durchschnittliche Geschwindigkeit von 50 km/h an, so entspricht dies einer MTBF von 4 Millionen Stunden. Ein autonomes Fahrzeug sollte jedoch in signifikant weniger Unfälle verwickelt sein als ein Fahrzeug, das von einem Menschen gesteuert wird, d.h. der Testlauf einer solchen Fahrzeugs müsste wesentlich länger sein als 4 Millionen Stunden.

Es wird deshalb angenommen, dass bei komplexen Softwaresystemen mit Millionen von Befehlen selbst bei einem rigorosen Entwicklungsprozess und nach sehr umfangreichen Tests die geforderte Zuverlässigkeit von 10⁻⁹ Ausfällen/Stunde nicht erreicht werden kann. Zusätzlich zu den Softwarefehlern müssen in einer Software/ Hardware (SW/HW) Komponente auch die Auswirkungen von transienten und permanenten Hardwarefehlern berücksichtigt werden. Die Auswirkungen eines transienter Hardwarefehler sind von den Auswirkungen eines Softwarefehlers im Betrieb oft nicht zu unterscheiden.

Wir bezeichnen ein Softwaresystem als *einfach,* wenn es eine übersichtliche Struktur aufweist, die erwarteten Funktionen des Systems exakt spezifiziert sind, und weniger als 1000 Softwarebefehle beinhaltet. Es wird angenommen, dass durch einen, insbesondere rigorosen, Entwurfsprozess alle Entwurfsfehler in einem einfachen Softwaresystem eliminiert werden können.

Es ist eine Aufgabe der Erfindung, ein Verfahren und ein System zum sicheren automatischen Betrieb einer Maschine oder eines Fahrzeuges anzugeben.

Diese Aufgabe wird mit einem eingangs genannten Verfahren und einem eingangs genannten Automatisierungssystem dadurch gelöst, dass erfindungsgemäß das Automatisierungssystem aus mindestens vier unabhängigen Subsystemen, insbesondere mindestens vier unabhängigen Hardware-/Software-Subsystemen, besteht, einem *Steuerungssystem,* einem *Sicherheitssystem,* einem *Notabschaltsystem* und einem *Vergleicher,* wobei die vier unabhängigen Subsysteme Zugriff auf eine globale Zeit haben und periodisch über ein fehlertolerantes zeitgesteuertes Kommunikationssystem Nachrichten übertragen, und wobei im Steuerungssystem eine komplexe Software, im Sicherheitssystem eine komplexe Software, und im Notabschaltsystem eine komplexe Software ausgeführt werden, und wobei im Vergleicher auf einer fehlertoleranten Hardware eine einfache Software ausführt wird, und wobei am Ende jeder periodischen Zeitscheibe das Steuerungssystem die für Aktoren, insbesondere Aktoren des Automatisierungssystems, bestimmten Sollwerte an den Vergleicher übermittelt, und das Sicherheitssystem die errechneten Sicherheitsintervalle für die Sollwerte an den Vergleicher übermittelt, und das Notabschaltsystem die für eine Notabschaltung errechneten Sollwerte an den Vergleicher übermittelt, und wobei der Vergleicher mittels der *einfachen Software* überprüft, ob die von dem Steuerungssystem übermittelten Sollwerte innerhalb der von dem Sicherheitssystem empfangenen Sicherheitsintervalle liegen, und falls dies der Fall ist, die Sollwerte des Steuerungssystems von dem Vergleicher an die Aktoren übergeben werden, und falls dies nicht der Fall ist, der Vergleicher einen Beginn einer Notabschaltung veranlasst, indem die von dem Notabschaltsystem erhaltenen Sollwerte zur Notabschaltung an die Aktoren übermittelt werden.

Erfindungsgemäß wird ein Verfahren und eine Automatisierungssystem zum sicheren automatischen Betrieb einer Maschine oder eines Fahrzeugs vorgeschlagen, wobei ein *nicht redundanter sicherheitskritischer Teil der Software so stark wie technisch möglich reduziert wird,* so dass diese sicherheitskritische Software *einfach* ist. Die einfache sicherheitskritische Software wird auf einem dedizierten Computer mit Hardwarefehlertoleranz ausgeführt. Die Kombination von einfacher Software (SW) auf fehlertoleranter Hardware (HW) führt zu einem SW/HW Subsystem dessen Ausfallwahrscheinlichkeit das geforderte Maß von besser als 10⁻⁹/ Stunde erreicht.

Die einfache Software wird somit auf einer fehlertoleranten Hardware ausgeführt.

Eine einfache sicherheitskritische Software lässt sich realisieren, wenn in einem auf einer fehlertoleranten Hardware laufenden Programm am Ende jeder Zeitscheibe überprüft wird, ob die errechneten Sollwerte für die Aktoren innerhalb eines oder innerhalb von mehreren sicheren Intervallen liegen. In einem autonomen Fahrzeug sind dies nur zwei Sollwerte: ein Sollwert für den Lenkwinkel und ein Sollwert für die Beschleunigung/Verzögerung. Die Sollwerte wie auch die sicheren Intervalle (bzw. Sicherheitsintervalle) werden von zwei vollständig unabhängigen komplexen Softwaresystemen am Ende jeder Zeitscheibe einem Vergleicher gesendet. Der Vergleicher ist ein fehlertolerantes Hardwaresystem, auf dem die einfache nicht-redundante Vergleichssoftware ausgeführt wird. Im Falle, dass der Vergleicher einen Fehler feststellt, wird eine Notabschaltung veranlasst.

Bevorzugte Ausgestaltungen des erfindungsgemäßen Verfahrens und des erfindungsgemäßen Automatisierungssystem sind im Folgenden beschrieben:
- Ein unabhängiges Monitorsystem überprüft am Ende jeder Zeitscheibe, ob das Steuerungssystem, das Sicherheitssystem, und das Notabschaltsystem korrekt funktionieren und im Fehlerfall eine Fehlermeldung an einen Betreiber der Maschine bzw. des Fahrzeuges ausgibt.
- Sensoren, insbesondere Sensoren des Automatisierungssystems, übertragen über ein gemeinsames Kommunikationssystem Messwerte an das Steuerungssystem, das Sicherheitssystem und das Notabschaltsystem; oder das Steuerungssystem, das Sicherheitssystem und das Notabschaltsystem verfügen jeweils über eigene Sensoren, wobei diese Sensoren Messwerte jeweils über ein eigenes Kommunikationssystem an ihr Subsystem übertragen.
- Einer, mehrere oder alle Sensoren besitzen fail-silent Eigenschaft.
- Das bzw. die Kommunikationssysteme zwischen den Sensoren und ihnen zugeordneten Subsystemen ist/sind zeitgesteuert.
- Das Automatisierungssystem ist aus einer Anzahl Fault-Containment Units (FCUs) aufgebaut, wobei vorzugsweise die einzelnen FCUs an unterschiedlichen Orten in der Maschine (Fahrzeug) angeordnet sind.

Die Erfindung wird an Hand der folgenden Zeichnung an Hand eines Beispiels näher erläutert. Es zeigt
Fig. 1 den Aufbau der vorgeschlagenen Systemarchitektur, wobei jedes Subsystem über eigene Sensoren verfügt, und
Fig. 2 den Aufbau der vorgeschlagenen Systemarchitektur, wobei die Ergebnisse aller Sensoren allen Subsystemen zur Verfügung gestellt werden.

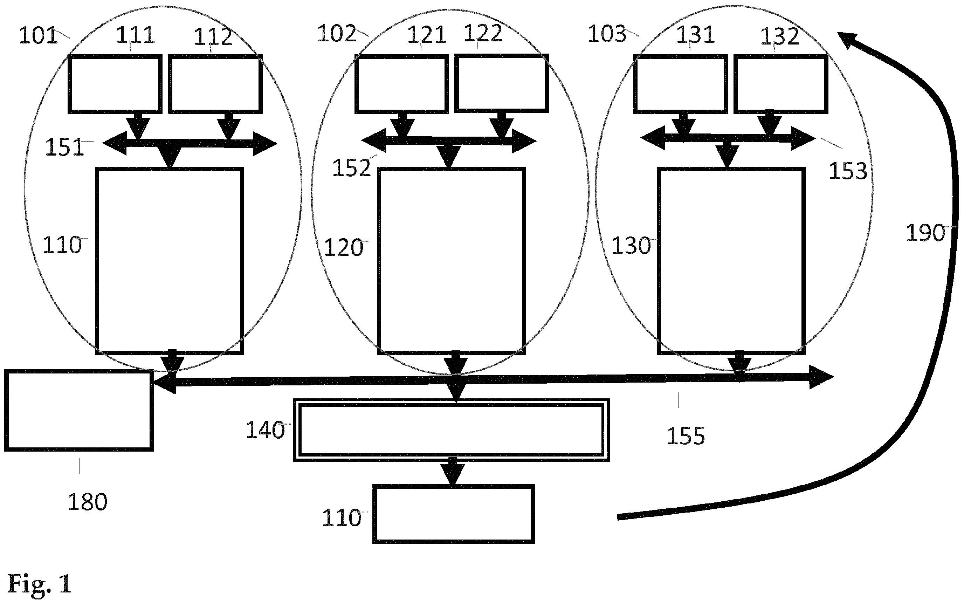

Entsprechend Fig. 1 enthält ein beispielhaftes Automatisierungssystem fünf unabhängige Hardware/Software Subsysteme, die nur über den Austausch von Nachrichten kommunizieren. Diese Subsysteme **101, 102, 103, 140** und **180** haben Zugriff auf eine fehlertolerante globale Zeit, die von einem fehlertoleranten Kommunikationssystem **155** bereitgestellt wird [Kop11]. Die Verarbeitung in den fünf Subsystemen **101,102,103,140** und 180 erfolgt in global synchronisierten Zeitscheiben. Am Beginn jeder Zeitscheibe wird vom Subsystem **101** mit den Sensoren **111** und **112,** vom Subsystem **102** mit den Sensoren **121** und **122** und vom Subsystem **103** mit den Sensoren **131** und **132** die Umwelt beobachtet und vor dem Ende der Zeitscheibe werden aus den Beobachtungen der Sensoren, die beispielsweise in Form entsprechender Messwerte an ihre Subsysteme übermittelt werden, die daraus errechneten Resultate von den Subsystemen **101,102** und **103** dem Vergleicher **140** mitgeteilt.

Die Subsysteme **101, 102, 103,** und **180** sind als eigenständige Fault-Containment Units (FCU) ausgebildet [Kop11]. Das fehlertolerante Subsystem **140** besteht vorzugsweise aus zwei oder drei eigenständigen FCUs. Die FCUs sind vorzugsweise an unterschiedlichen Orten in der Maschine (Fahrzeug) angeordnet, so dass bei einem Unfall die Wahrscheinlichkeit, dass mehr als eine FCU beschädigt wird, reduziert ist.

Subsystem **101,** das *Steuerungssystem,* umfasst die Sensoren **111** und **112,** ein Kommunikationssystem **151** und eine SW/HW Komponente **110.** Auf dem Steuerungssystem **101** wird mittels komplexer Software die Berechnung von *Sollwerten für die Aktoren,* insbesondere am Ende jeder Zeitscheibe, durchgeführt.

Subsystem **102,** das *Sicherungssystem,* umfasst die Sensoren **121** und **122,** ein Kommunikationssystem **152** und eine SW/HW Komponente **120.** Auf dem Sicherungssystem **102** wird mittels komplexer Software die Berechnung von *sicheren Intervallen für die Sollwerte für die Aktoren,* insbesondere am Ende jeder Zeitscheibe, durchgeführt.

Subsystem **103,** das *Notabschaltsystem,* umfasst die Sensoren **131** und **132,** ein Kommunikationssystem **153** und eine SW/HW Komponente **130.** Auf dem *Notabschaltsystem* **103** werden mittels komplexer Software *Sollwerten für die Aktoren* berechnet, die am Ende jeder Zeitscheibe den Prozess vom gegenwärtigen Zustand in einen sicheren Zustand führen. Die Erfassung des gegenwärtigen Zustandes der Maschine erfolgt über die Sensoren **131** und **132,** die auch die korrekte Wirkung der Aktoren **110** beobachten.

Subsystem **140,** der *Vergleicher,* besteht aus einem fehlertoleranten Computer **140,** auf dem eine *einfache* Software abläuft. Subsystem **140** erhält über das fehlertolerante Kommunikationssystem **155** am Ende jeder Zeitscheibe die Daten von Subsystem **101,** Subsystem **102** und Subsystem **103.** Subsystem **140** überprüft, ob die von Subsystem **101** errechneten Sollwerte innerhalb der von Subsystem **102** bereitgestellten sicheren Intervallen (Sicherheitsintervalle) liegen. Das fehlertolerante Kommunikationssystem **155** ist zeitgesteuert [Kop11].

Im Normalfall liegt ein Sollwert für einen Aktor **110** in einem einzigen sicheren Intervall. In Sonderfällen - wenn eine *Bifurkation* vorliegt (zum Beispiel kann ein großer Stein in der Mitte einer Straße entweder links oder rechts umfahren werden) - können zwei oder mehrere sich nicht überlappende sichere Intervalle vom Subsystem **102** vorgegeben werden. Wenn die Sollwerte vom Subsystem **101** innerhalb der von Subsystem **102** vorgegeben sicheren Intervalle liegen, werden die von Subsystem **101** empfangenen Sollwerte an die Aktoren **110** weitergeleitet. Wenn dies nicht der Fall ist, werden die von Subsystem **103** bereitgestellten Sollwerte zur Notabschaltung an die Aktoren übergeben, so dass die Maschine oder das Fahrzeug in einen sicheren Zustand geführt wird.

Wie eingangs in der Einleitung beschrieben gibt es in einem autonomen Fahrzeugs zwei Sollwerte (Sollwert für den Lenkwinkel, Sollwert für die Beschleunigung/Verzögerung), die überprüft werden müssen. Die Überprüfung dieser beiden Sollwerte wird am Ende jeder Zeitscheibe von der SW/HW Komponente **140** mittels weniger Befehle einer einfachen Software durchgeführt.

Das optionale Subsystem **180** ist ein *Monitorsystem,* das die ordnungsgemäße Funktion der anderen Subsysteme, insbesondere des Subsystems **103,** laufend überprüft und im Fehlerfall eine Fehlermeldung an den Betreiber der Maschine ausgibt.

Im beschriebenen Automatisierungssystem kann ein katastrophaler Fehler auftreten, wenn
1. die beiden Subsysteme Steuerungssystem **101** und Sicherungssystem **102** gleichzeitig fehlerhaft sind, da in diesem Fall die Fehler vom Vergleicher **140** nicht erkannt werden oder wenn
2. eines der Subsysteme **101** oder **102** fehlerhaft ist, der Vergleicher **140** deshalb die Notabschaltung aktiviert und gleichzeitig die Notabschaltung fehlerhaft ist.

In beiden Fällen müssen zwei voneinander unabhängige Fehler auftreten. Wenn die Annahme der *Unabhängigkeit der Fehlerursachen* angenommen werden kann, dann ergibt sich die Wahrscheinlichkeit für das gleichzeitige Auftreten von zwei unabhängigen Ereignissen in einem Zeitintervall als das Produkt der Wahrscheinlichkeiten des Auftretens der Einzelereignisse.

Wesentlich für die Gültigkeit der vorgetragenen Argumentation ist die *vollständige Unabhängigkeit* der vier Subsysteme **101, 102, 103** und **140.** In der in Fig. 1 dargestellten Architektur bzw. generell im allgemeinen Rahmen der vorliegenden Erfindung kann diese Unabhängigkeit durch folgende Maßnahmen erreicht:
- Jedes der vier Subsysteme Steuerungssystem, Sicherungssystem, Notabschaltsystem, Vergleicher **101, 102, 103** und **140** bildet eine Fault-Containment Unit (FCU) [Kop11] mit dedizierter Hardware und dedizierten Sensoren.
- Die Spezifikation und Implementierung der Software in den drei Subsystemen Steuerungssystem, Sicherungssystem, Notabschaltsystem **101, 102** und **103** ist unterschiedlich, so dass *common-mode* Entwurfsfehler unwahrscheinlich sind.
- Es gibt keine Kommunikation zwischen den Subsystemen Steuerungssystem, Sicherungssystem, Notabschaltsystem **101, 102** und **103,** so dass eine Fehlerfortpflanzung über den Datenfluss ausgeschlossen ist. Die Synchronisation der Zustände der drei Subsysteme **101, 102** und **103** erfolgt durch die Beobachtung der Umgebung durch die Sensoren, die die Überprüfung der Funktion und der Wirkung der Aktoren **110** einschließt (stigmergischer Informationsfluss **190**).

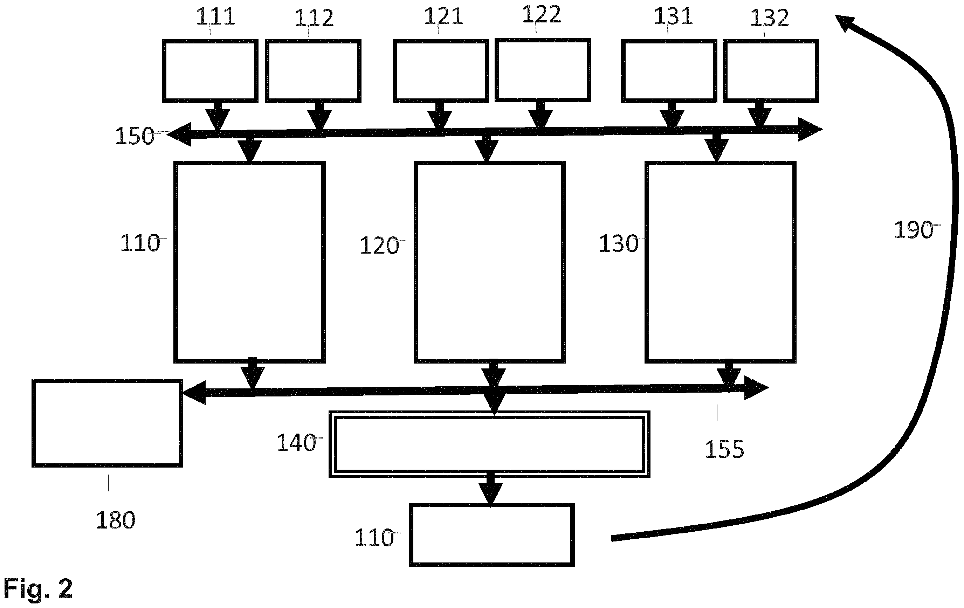

Fig. 2 zeigt eine Alternative zur Architektur der Fig. 1, in der die Ergebnisse aller Sensoren den drei Subsystemen **101,102** und **103** über ein gemeinsames Kommunikationssystem **150** zur Verfügung gestellt werden. Diese Alternative bietet folgende Vorteile:
- Mit der Vielzahl der Sensoren kann ein Subsystem die Umwelt genauer beobachten.
- Der Ausfall eines Sensors kann durch die Redundanz in der Datenerfassung beherrscht werden. Dies führt zur Verbesserung der Zuverlässigkeit.
- Durch die mehrfache Verwendung der Sensordaten können die Kosten reduziert werden.

Diesen Vorteilen der Fig. 2 steht folgender Nachteil gegenüber
- Die volle Unabhängigkeit der Subsysteme ist nicht mehr gegeben, da ein fehlerhafter Sensor die Entscheidung mehrere Subsysteme beeinflussen kann.

Dieser Nachteil kann abgefedert werden, indem Sensoren eingesetzt werden, die die *fail-silent* Eigenschaft aufweisen, d.h. ein Sensor überprüft seine Ergebnisse und liefert entweder richtige oder keine Resultate. Sensoren, die die fail-silent Eigenschaft aufweisen, sind allerdings wesentlich aufwendiger und teurer als einfache Sensoren, die diese Eigenschaft nicht aufweisen.

Die Entscheidung, ob die Alterative der Fig. 1 oder der Fig.2 realisiert wird, hängt von den Eigenschaften und Kosten der verfügbaren Sensoren ab.

Vorzugsweise ist im Automatisierungssystem der Fig. 1 bzw. Fig. 2 auch ein unabhängiges Monitorsystem enthalten, das am Ende jeder Zeitscheibe überprüft, ob das *Steuerungssystem* **101,** das *Sicherheitssystem* **102,** und das *Notabschaltsystem* **103** korrekt funktionieren, und das im Fehlerfall eine Fehlermeldung an den Betreiber der Maschine ausgibt.

Die beschriebenen Ausführungsbeispiele wurden an Hand von fünf Subsystemen erläutert. Die im Rahmen der oben stehenden Figurenbeschreibung getätigten Aussagen zu einzelnen Komponenten und zur Funktionsweise sind aber nicht nur im Zusammenhang mit diesen konkreten Ausführungsbeispielen gültig, sondern gelten auch im Zusammenhang des allgemeinen Erfindungsgedankens, sind also nicht auf die konkreten Ausführungsbeispiele beschränkt.

### Literaturhinweise:

[Dvo09] Dvorak, D.L. Editor. NASA Study on Flight Software Complexity. Final Report. Jet Propulsion Laboratory, Pasadena, Cal. USA. 2009.
[Kop11] Kopetz, H. Real-Time Systems. Springer Verlag. 2011
[Lit97] Littlewood, B. et al. Some conservative stopping rules for the operational testing of safety critical Software. IEEE Transaction on Software Engineering, Vol 23, No. 11, pp.673-783. 1997.
[Wik18] Wikipedia. List of countries by traffic-related death rate. Accessed April 12, 201

## Patentansprüche

1. Verfahren zum Betrieb, insbesondere zum sicheren automatischen Betrieb, einer Maschine oder eine Fahrzeugs, insbesondere eines Kraftfahrzeuges, mit einem Automatisierungssystem,
**dadurch gekennzeichnet, dass**
das Automatisierungssystem aus mindestens vier unabhängigen Subsystemen, insbesondere Hardware-/Software-Subsystemen, besteht, einem *Steuerungssystem* **(101),** einem *Sicherheitssystem* **(102),** einem *Notabschaltsystem* **(103)** und einem *Vergleicher* **(140),** wobei die vier unabhängigen Subsysteme **(101, 102, 103, 140)** Zugriff auf eine globale Zeit haben und periodisch über ein fehlertolerantes zeitgesteuertes Kommunikationssystem **(155)** Nachrichten übertragen, und wobei im Steuerungssystem **(101)** eine komplexe Software, im Sicherheitssystem **(102)** eine komplexe Software, und im Notabschaltsystem **(103)** eine komplexe Software ausgeführt werden, und wobei im Vergleicher **(140)** auf einer fehlertoleranten Hardware eine einfache Software ausführt wird, und wobei am Ende jeder periodischen Zeitscheibe das Steuerungssystem **(101)** die für Aktoren, insbesondere Aktoren des Automatisierungssystems, bestimmten Sollwerte an den Vergleicher **(140)** übermittelt, und das Sicherheitssystem **(102)** die errechneten Sicherheitsintervalle für die Sollwerte an den Vergleicher (**140**) übermittelt, und das Notabschaltsystem **(103)** die für eine Notabschaltung errechneten Sollwerte an den Vergleicher **(140)** übermittelt, und wobei der Vergleicher **(140)** mittels der *einfachen Software* überprüft, ob die von dem Steuerungssystem **(101)** übermittelten Sollwerte innerhalb der von dem Sicherheitssystem **(102)** empfangenen Sicherheitsintervalle liegen, und falls dies der Fall ist, die Sollwerte des Steuerungssystems **(101)** von dem Vergleicher **(140)** an die Aktoren **(110)** übergeben werden, und falls dies nicht der Fall ist, der Vergleicher **(140)** einen Beginn einer Notabschaltung veranlasst, indem die von dem Notabschaltsystem **(103)** erhaltenen Sollwerte zur Notabschaltung an die Aktoren **(110)** übermittelt werden.

2. Verfahren nach Anspruch 1, **dadurch gekennzeichnet, dass** ein unabhängiges Monitorsystem **(180)** am Ende jeder Zeitscheibe überprüft, ob das Steuerungssystem **(101),** das Sicherheitssystem **(102),** und das Notabschaltsystem **(103)** korrekt funktionieren und im Fehlerfall eine Fehlermeldung an einen Betreiber der Maschine bzw. des Fahrzeuges ausgibt.

3. Verfahren nach Anspruch 1 oder 2, **dadurch gekennzeichnet, dass** Sensoren **(**111, **112, 121, 122, 131, 132),** insbesondere Sensoren des Automatisierungssystems, über ein gemeinsames Kommunikationssystem **(150)** Messwerte an das Steuerungssystem **(101),** das Sicherheitssystem **(102)** und das Notabschaltsystem **(103)** übertragen.

4. Verfahren nach Anspruch 1 oder 2, **dadurch gekennzeichnet, dass** das Steuerungssystem **(101),** das Sicherheitssystem **(102)** und das Notabschaltsystem **(103)** jeweils über eigene Sensoren **(111, 112; 121, 122; 131, 132)** verfügen, wobei diese Sensoren Messwerte jeweils über ein eigenes Kommunikationssystem **(151, 152, 153)** an ihr Subsystem **(101, 102, 103)** übertragen.

5. Verfahren nach einem mehreren der Ansprüche 1 bis 4, **dadurch gekennzeichnet, dass** einer, mehrere oder alle Sensoren **(111,112,121,122,131,132)** fail-silent Eigenschaft besitzen.

6. Verfahren nach einem der Ansprüche 1 bis 5, **dadurch gekennzeichnet, dass** das bzw. die Kommunikationssysteme **(150; 151, 152, 153)** zwischen den Sensoren und ihnen zugeordneten Subsystemen **(101, 102, 103)** zeitgesteuert ist.

7. Automatisierungssystem zum Betrieb, insbesondere zum sicheren automatischen Betrieb einer Maschine oder eine Fahrzeugs,
**dadurch gekennzeichnet, dass**
das Automatisierungssystem aus mindestens vier unabhängigen Subsystemen, insbesondere Hardware-/Software-Subsystemen besteht, einem *Steuerungssystem* **(101),** einem *Sicherheitssystem* **(102),** einem *Notabschaltsystem* **(103)** und einem *Vergleicher* **(140),** wobei die vier unabhängigen Subsysteme Zugriff auf eine globale Zeit haben und periodisch über ein fehlertolerantes zeitgesteuertes Kommunikationssystem (155) Nachrichten übertragen, und wobei im Steuerungssystem **(101)** eine komplexe Software, im Sicherheitssystem **(102)** eine komplexe Software, und im Notabschaltsystem **(103)** eine komplexe Software ausgeführt werden, und wobei im Vergleicher **(140)** auf einer fehlertoleranten Hardware eine einfache Software ausführt wird, und wobei am Ende jeder periodischen Zeitscheibe das Steuerungssystem **(101)** die für Aktoren bestimmten Sollwerte an den Vergleicher **(140)** übermittelt und das Sicherheitssystem **(102)** die errechneten Sicherheitsintervalle für die Sollwerte an den Vergleicher **(140)** übermittelt, und wobei das Notabschaltsystem **(103)** die für eine Notabschaltung errechneten Sollwerte an den Vergleicher **(140)** übermittelt, und wobei der Vergleicher **(140)** mittels der *einfachen Software* überprüft, ob die Sollwerte vom Steuerungssystem **(101)** innerhalb der vom Sicherheitssystem **(102)** empfangenen Intervalle liegen, und falls dies der Fall ist, die Sollwerte des Steuerungssystems **(101)** vom Vergleicher **(140)** an Aktoren **110** übergeben werden, und falls dies nicht der Fall ist, der Vergleicher **(140)** einen Beginn einer Notabschaltung veranlasst, indem die vom Notabschaltsystem **(103)** erhaltenen Sollwerte zur Notabschaltung an die Aktoren **(110)** übermittelt werden.

8. Automatisierungssystem nach Anspruch 7, **dadurch gekennzeichnet, dass** das Automatisierungssystem aus einer Anzahl Fault-Containment Units (FCUs) aufgebaut wird, wobei vorzugsweise die einzelnen FCUs an unterschiedlichen Orten in der Maschine (Fahrzeug) angeordnet sind.
